Europäisches Patentamt

European Patent Office

Office européen des brevets

(19)

(11) Publication number: **0 120 554**
**B1**

(12) **EUROPEAN PATENT SPECIFICATION**

(45) Date of publication of patent specification: **29.07.87**

(51) Int. Cl.⁴: **B 60 T 8/64**

(21) Application number: **84300232.0**

(22) Date of filing: **16.01.84**

(54) Improvements in hydraulic anti-skid braking systems for vehicles.

(30) Priority: **28.01.83 GB 8302459**

(43) Date of publication of application:
**03.10.84 Bulletin 84/40**

(45) Publication of the grant of the patent:
**29.07.87 Bulletin 87/31**

(84) Designated Contracting States:
**DE FR IT**

(56) References cited:
**DE-A-3 109 372**
**GB-A-2 057 613**
**GB-A-2 071 242**
**US-A-3 951 465**

(73) Proprietor: **LUCAS INDUSTRIES public limited company**
**Great King Street**
**Birmingham, B19 2XF West Midlands (GB)**

(72) Inventor: **Farr, Glyn Phillip Reginald**
**21 The Hamlet**
**Leek Wootton Warwickshire (GB)**
Inventor: **Brearley, Malcolm**
**2 Widney Manor Road**
**Solihull West Midlands B91 3JQ (GB)**

(74) Representative: **Spall, Christopher John et al**
**BARKER, BRETTELL & DUNCAN 138 Hagley Road**
**Edgbaston Birmingham B16 9PW (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to hydraulic anti-skid braking systems for vehicles of the kind in which a supply of hydraulic fluid under pressure, for example from an hydraulic master cylinder, is adapted to be supplied to the actuator of a wheel brake through a modulator which is adapted to modulate the pressure applied to the actuator in accordance with a skid signal from skid sensing means.

Known hydraulic anti-skid braking systems of the kind set forth normally include an hydraulic power system for re-applying the brake following the release of brake fluid upon skid correction. The power is required to make up the loss of energy as a consequence of having dumped fluid from the brake to affect brake release. The power may be provided by a pump driven by the prime mover of the vehicle or by a pump driven by an electric motor. When the pump is driven from the prime mover, the brake cannot be re-applied following correction of a skid if, in the mean time, the prime mover has stalled. Similarly, upon failure of the electric motor, the brake cannot be re-applied since the pump is unable to meter fluid back to the master cylinder as is required for brake re-application.

In our G.B. Patent Application No. 8230101 we have described an anti-skid system in which a pump for affecting brake re-application following correction of a skid can be driven from a wheel of a vehicle. Thus, energy for re-applying the brake is always available when the vehicle is rolling in a forwards direction.

The system described in G.B. Patent Application No 8230101 is concerned with controlling the braking effect in response to a signal from a wheel from which the pump is driven and it is not possible with that system to modulate independently the relative braking pressures applied to all four wheels of the vehicle in accordance with skid signals from the individual wheels.

In the anti-skid braking system of DE—A—3 109 372, which discloses the features of the first part of claim 1 and which comprises two brake-applying circuits, each including a source of brake-applying fluid, a connection between the brake on a front wheel and on the diagonally opposite rear wheel, and an apportioning valve between the source and the rear wheel brake, a modulator is located in each connection to modulate the supply of fluid from the source to both front and rear wheel brakes of that circuit. The system further includes four skid sensors, each for providing a skid signal dependent upon the behaviour of a respective wheel, and a control module for operating at least one of the modulators in accordance with the magnitude or nature of the skid signal or signals.

According to our invention in an anti-skid braking system for a four wheel vehicle having brakes on front and rear wheels, the system comprises first and second brake applying circuits, the first circuit comprising a supply of fluid under pressure, a first modulator including first and second modulating means and pump means for modulating fluid from the supply to brakes on two different wheels independently of each other, the second circuit comprising a second supply of fluid under pressure, a second modulator including third and fourth modulating means and pump means for modulating fluid from the second supply to brakes on the two remaining wheels independently of each other, a drive means between the modulators and the transmission of the vehicle for operating both pump means simultaneously, four skid sensors, each for providing a skid signal dependent upon the behaviour of a respective wheel, and a control module for operating each modulating means in accordance with a skid signal from a skid sensor for sensing the behaviour of a respective wheel, characterised in that a first drive connection is provided between a first part of the transmission of the vehicle for operating the first pump means, a second drive connection is provided between a second part of the transmission of the vehicle for operating the second pump means, and the first and second drive connections are independent of each other.

By the use of two modulators driven from different parts of the transmission of the vehicle, which provides the energy for brake re-application following skid correction, we ensure that, following skid correction, we are still able to re-apply at least two of the brakes even upon failure of one of the drive connections.

When the vehicle is of the front wheel drive type each modulator may be driven from a respective front wheel. However, when the vehicle is of the rear wheel drive type both modulators are driven from the output shaft of the gear box.

Each modulator may control the brakes on one front wheel and a diagonally opposite rear wheel, in the case of an "X" split.

In such a layout each supply may comprise a different pressure space of a tandem master cylinder.

When the system has a front/rear split one pressure space is connected to one modulating means of each modulator, and the other pressure space is connected to the other modulating means of each modulator.

In such a construction upon failure of one of the pressure spaces under normal braking conditions either the front or rear brakes can still be applied. However, upon failure of one of the modulators under anti-skid conditions, the system may act as an "X" split, although the control module may be operative to shut the system down when such a condition is sensed.

Three embodiments of our invention are illustrated in the accompanying drawings in which:—

*Figure 1* is a layout of an hydraulic anti-skid braking system for a four wheel vehicle;

*Figure 2* is a layout similar to Figure 1 but showing a modification; and

*Figure 3* is a layout similar to Figure 2 but showing a modification.

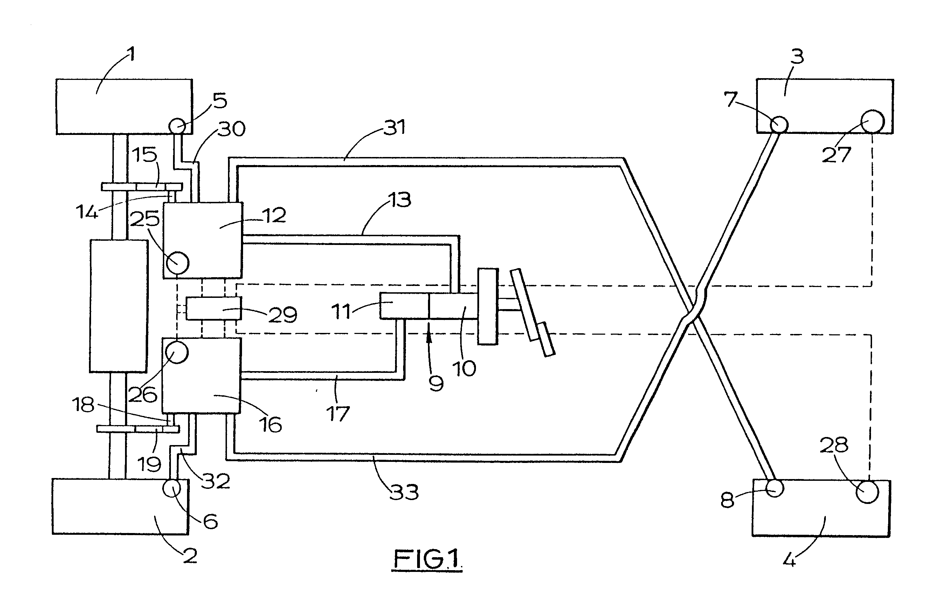

The braking system illustrated in the layout of Figure 1 comprises two separate hydraulic brake-applying circuits for a vehicle of a front wheel drive type having two front wheels 1, 2 and two rear wheels 3, 4.

The wheels 1 and 2 are adapted to be braked by respective brakes 5 and 6, and the wheels 3 and 4 by respective brakes 7 and 8.

A pedal-operated master cylinder 9 has two pressure spaces 10 and 11. The pressure space 10 is connected to a brake-pressure modulator 12 through a pipe-line 13. The modulator 12 is driven by a shaft 14, which, in turn, is driven through a drive 15 from the front wheel 1. The pressure space 11 is connected to a brake-pressure modulator 16 through a pipe-line 17. The modulator 16 is driven by a shaft 18 which, in turn, is driven through a drive 19 from the wheel 2. Each modulator 12, 16 is conveniently of the twin kind forming the subject of our G.B. Patent Application No. 8302460 of even date and need not be further described herein except to explain that each modulator 12, 16 incorporates two separate modulating means and pump means 12a, 12b; 16a, 16b respectively for modulating the pressure from a respective pressure space to the brake on one front wheel and to the brake on a diagonally opposite rear wheel respectively. As illustrated the two modulating means of the modulator 12 are connected to the brake 5 and the brake 8 through separate pipe-lines 30 and 31, and the two modulating means of the modulator 16 are connected to the brake 6 and the brake 7 through separate pipe-lines 32 and 33.

A brake-pressure apportioning valve may be positioned in the pipe-line 31 between the modulator 12 and the brake 8, and a brake pressure apportioning valve may be positioned in the pipe-line 33 between the modulator 16 and the brake 7.

The behaviour of each wheel 1, 2, 3, 4, namely deceleration and/or slip is sensed by respective sensors 25, 26, 27, 28 which emit skid signals, and the skid signals are supplied to an electronic control module 29 which, in turn, is operative to emit an electric current to operate the solenoid-operated dump valve of one of the modulating means in order to relieve the pressure of fluid supplied to the respective brake.

Should the apportioning valves be omitted, then the rear wheel brakes must be taken-off at lower thresholds, with the brake-applying pressure relieved at relatively lower pressures.

The control module 29 is of the four-channel type and is adapted to operate a respective modulating means to relieve the pressure applied to brake in response to a skid signal from a sensor on a corresponding wheel.

If a vehicle is aqua-planing at high speed on a very wet surface the further re-application of a brake on a rear wheel will be delayed until the respective front wheel 1 or 2 has passed onto a good surface so that rotation of the front wheel 1 or 2, and consequent rotation of the respective shaft 14 or 18, can start again.

The control module 29 is arranged to shut down the anti-skid system in the event of failure of a drive 15 or 19 to one of the modulators. This is achieved by arranging for the sensors 25 and 26 to sense the rotation of the shafts 14 or 18, rather than the direct behaviour of the wheels 1 and 2. Upon failure of one of the drives 15 or 19, the respective sensor, say the sensor 25, will emit a skid signal which is monitored by the control module 29. When the difference between that signal and any signal emitted by the sensor 26 has lasted for a predetermined interval the control module 29 will shut down the system, and may be adapted to actuate a warning device.

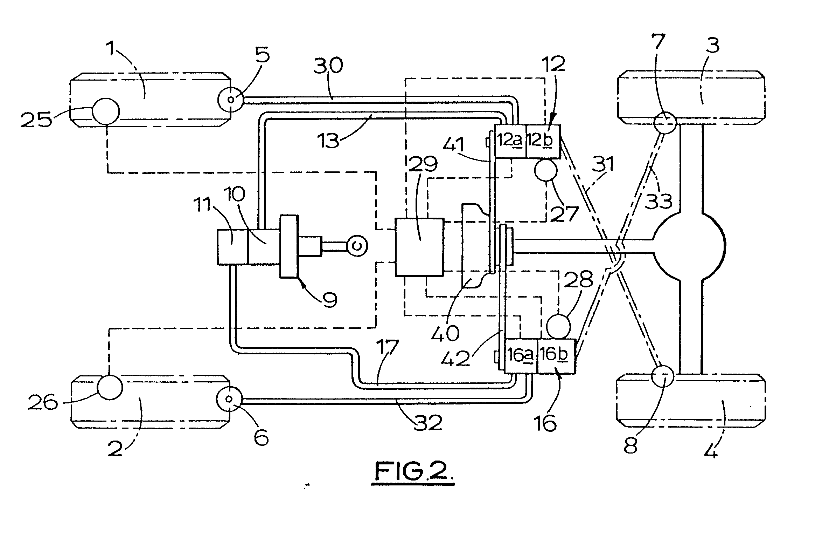

In the layout of Figure 2 for a rear wheel drive vehicle the modulators 12 and 16 are driven from the output shaft of the gear box 40 through belts 41 and 42. Thus the modulators 12 and 16 are both driven at substantially constant speeds.

The construction and operation of the system of Figure 2 is otherwise the same as Figure 1 and corresponding reference numerals have been applied to corresponding parts.

In this construction failure of one of the belts 41 or 42 is sensed by the control module 29 which may be operable immediately to shut down the system and actuate the warning device.

In this construction the sensors 27 and 28 sense the mean of speed of the rear wheels 3 and 4 since both rear wheels 3 and 4 are driven from the same output shaft.

In a modification, the modulators 12 and 16 can be driven from the differential for the back axle. This is not preferred due to the increased number of and substantial length of pipes which would be required.

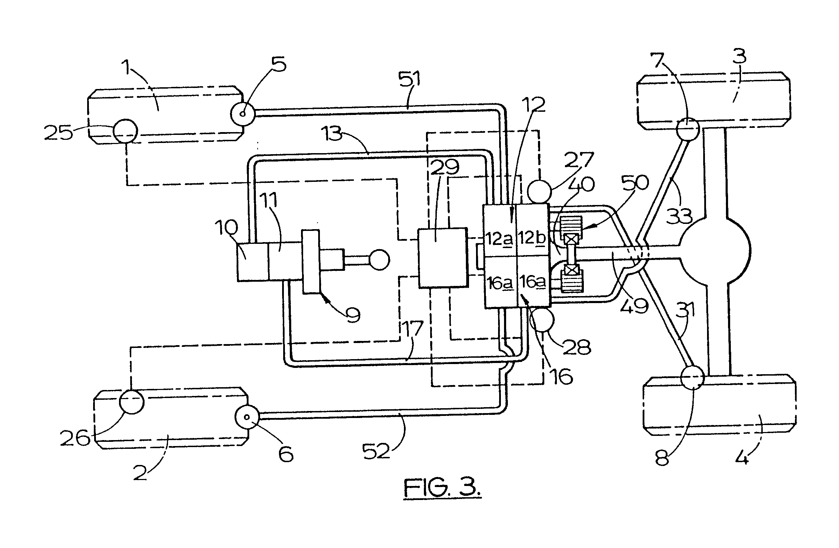

In the layout of Figure 3 the two modulators 12 and 16 are driven from the output shaft 49 from the gearbox 40 through drive gearing 50.

The system has a front/rear split so that the pressure space 10 is connected to corresponding modulating means 12a, 16a of both modulators 12 and 16 through the pipe-line 13 and these two modulating means 12a, 16a are in turn connected through pipe-lines 51 and 52 to the brakes 5 and 6 respectively of the front wheels. The pressure space 11 is connected to corresponding modulating means 12a, 16b of both modulators 12 and 16 through the pipe-line 17, and these modulators are connected through the pipe-lines 31 and 33 to the brakes 8 and 7 of the diagonally opposite rear wheels 4 and 3 respectively.

In the event of failure of one of the pressure spaces during normal braking the brakes on either the front or rear pair of wheels can still be applied from the remaining, still operative, pressure space.

Should one of the modulators 12 or 16 fail then the system acts as an "X" split with the remaining modulator operative to operate the brake on one front wheel, and the brake on the diagonally opposite rear wheel.

Failure of a modulator is more likely to occur when the modulator is driven by a belt as in the construction of Figure 2 when the belt snaps. In such a situation of differential between the signals sensed by the sensors 27 and 28 will be recognised by the control module 29 which may then shut down the system and actuate a warning device to indicate to the driver that a failure has occurred.

The construction and operation of the system of Figure 3 is otherwise the same as that of Figure 2 and corresponding reference numerals have been applied to corresponding parts.

## Claims

1. An anti-skid braking system for a four wheel vehicle having brakes (5, 6; 7, 8) on front and rear wheels, in which the system comprises first and second brake applying circuits, the first circuit comprising a supply (10) of fluid under pressure, a first modulator (12) including first and second modulating means and pump means (12a, 12b) for modulating fluid from the supply (10) to brakes on two different wheels (1, 4) independently of each other, the second circuit comprising a second supply (11) of fluid under pressure, a second modulator (16) including third and fourth modulating means and pump means (16a, 16b) for modulating fluid from the second supply (11) to brakes on the two remaining wheels (2, 3) independently of each other, drive means between the modulators (12, 16) and the transmission of the vehicle for operating both pump means simultaneously, four skid sensors (25, 26, 27, 28), each for providing a skid signal dependent upon the behaviour of a respective wheel (1, 2, 3, 4), and a control module (29) for operating each modulating means in accordance with a skid signal from a skid sensor for sensing the behaviour of a respective wheel, characterised in that a first drive connection (15, 41) is provided between a first part of the transmission of the vehicle for operating said first pump means, a second drive connection (19, 42) is provided between a second part of the transmission of the vehicle for operating the second pump means, and the first and second drive connections are independent of each other.

2. A system according to claim 1, characterised in that the vehicle is of the front wheel drive type, and each modulator (12, 16) is driven from a respective front wheel (1, 2).

3. A system according to claim 1, characterised in that the vehicle is of the rear wheel drive type, and both modulators (12, 16) are driven from the output shaft of the gear box (40).

4. A system according to any preceding claim, characterised in that each modulator (12, 16) is adapted to control the brakes on one front wheel (1 or 2) and a diagonally opposite rear wheel (4 or 3).

5. A system according to any preceding claim, characterised in that each supply (10, 11) comprises a different pressure space of a tandem master cylinder (9).

6. A system according to claim 5, characterised in that one pressure space (10) is connected to one modulating means of modulator, and the other pressure space (11) is connected to the other modulating means of each modulator.

## Patentansprüche

1. Antiblockiersystem für ein vierrädriges Fahrzeug, das Bremsen (5, 6; 7, 8) an den Vorder- und Hinterrädern hat, bei dem das System einen ersten und zweiten Bremskreislauf, wobei der erste Kreislauf einen Vorrat (10) von unter Druck stehendem Druckmittel, einen ersten Modulator (12) mit ersten und zweiten Modulationseinrichtungen und Pumpeinrichtungen (12a, 12b) zur unabhängig voneinander arbeitenden Druckmittelsteuerung vom Vorrat (10) zu den Bremsen zweier verschiedener Räder (1, 4) und der zweite Kreislauf einen zweiten Vorrat (11) von unter Druck stehendem Druckmittel, einen zweiten Modulator (16) mit dritten und vierten Modulationseinrichtungen und Pumpeinrichtungen (16a, 16b) zur unabhängig voneinander arbeitenden Druckmittelsteuerung vom zweiten Vorrat (11) zu den Bremsen der beiden verbleibenden Räder (2, 3), Antriebseinrichtungen zwischen den Modulatoren (12, 16) und dem Getriebe des Fahrzeugs zum gleichzeitigen Betreiben beider Pumpeinrichtungen, vier Blockiersensoren (25, 26, 27, 28) von denen jede zur Erzeugung eines Blockiersignals abhängig vom Verhalten des jeweiligen Rades (1, 2, 3, 4) geeignet ist und ein Steuermodul (29) zum Betätigen jeder Modulationseinrichtung in Übereinstimmung mit einem Blockiersignal von einem Blockiersensor zur Wahrnehmung des Verhaltens eines entsprechenden Rades aufweist, dadurch gekennzeichnet, daß eine erste Antriebsverbindung (15, 41) zwischen einem ersten Teil des Fahrzeuggriebes zum Betätigen der ersten Pumpeinrichtungen vorgesehen ist, eine zweite Antriebsverbindung (19, 42) zwischen einem zweiten Teil des Fahrzeuggetriebes zum Betätigen der zweiten Pumpeinrichtungen vorgesehen ist und die ersten und zweiten Antreibsverbindungen unabhängig voneinander sind.

2. System nach Anspruch 1, dadurch gekennzeichnet, daß das Fahrzeug Frontantrieb aufweist und jeder Modulator (12, 16) von einem entsprechenden Vorderrad (1, 2) angetrieben ist.

3. System nach Anspruch 1, dadurch gekennzeichnet, daß das Fahrzeug Hinterradantrieb aufweist und beide Modulatoren (12, 16) von der Abtriebswelle des Getriebegehäuses (40) angetrieben sind.

4. System nach einem der vorhergehenden Anspruch, dadurch gekennzeichnet, daß jeder Modulator (12, 16) zum Steuern der Bremsen an einem Vorderrad (1 oder 2) und eine diagonal gegenüberliegenden Hinterrad (4 oder 3) bestimmt ist.

5. System nach einem der vorhergehenden Ansprüche, dadurch gekennzeichnet, daß jeder Vorrat (10, 11) eine andere Druckkammer eines Tandem-Hauptzylinders (9) umfaßt.

6. System nach Anspruch 5, dadurch gekennzeichnet, daß eine Druckkammer (10) mit einer Modulationseinrichtung eines Modulators und die andere Druckkammer (11) mit der anderen Modulationseinrichtung jedes Modulators verbunden ist.

## Revendications

1. Un système de freinage anti-blocage pour un véhicule à quatre roues comportant des freins (5, 6; 7, 8) sur les roues avant et arrière, système comprenant des premier et second circuits d'application des freins, le premier circuit comprenant une source (10) de fluide sous pression, un premier modulateur (12) comportant des premier et second moyens de modulation et un moyen de pompage (12a, 12b) pour l'alimentation modulée en fluide depuis la source (10) vers les freins de deux roues différentes (1, 4) indépendamment l'un de l'autre, le second circuit comprenant une seconde source (11) de fluide sous pression, un second modulateur (16) comportant des troisième et quatrième moyens de modulation et un moyen de pompage (16a, 16b) pour l'alimentation modulée en fluide depuis la seconde source (11) vers les freins des deux roues restantes (2, 3) indépendamment l'un de l'autre, des moyens d'entraînement placés entre les modulateurs (12, 16) et la transmission du véhicule pour actionner les deux moyens de pompage simultanément, quatre détecteurs de blocage (25, 26, 27, 28) fournissant chacun un signal de blocage en fonction du comportement d'une roue respective (1, 2, 3, 4), et un module de commande (29) pour actionner chaque moyen de modulation en correspondance à un signal de blocage provenant d'un détecteur de blocage afin de détecter le comportement d'une roue respective, caractérisé en ce qu'une première liaison d'entraînement (15, 41) est prévue entre une première partie de la transmission véhicule pour actionner le premier moyen de pompage, une seconde liaison d'entraînement (19, 42) est prévue entre une seconde partie de la transmission du véhicule pour actionner le second moyen de pompage, et les première et seconde liaisons d'entraînement sont indépendantes l'une de l'autre.

2. Un système selon la revendication 1, caractérisé en ce que le véhicule est du type à roues avant motrices, et chaque modulateur (12, 16) est entraîné à partir d'une roue avant respective (1, 2).

3. Un système selon la revendication 1, caractérisé en ce que le véhicule est du type à roues arrière motrices, et les deux modulateurs (12, 16) sont entraînés à partir de l'arbre de sortie de la boîte de vitesses (40).

4. Un système selon une quelconque des revendications précédentes, caractérisé en ce que chaque modulateur (12, 16) est adapté pour commander les freins d'une roue avant (1 ou 2) et d'une roue arrière diagonalement opposée (4 ou 3).

5. Un système selon une quelconque des revendications précédentes, caractérisé en ce que chaque source (10, 11) comprend un volume de pression différent d'un maître-cylindre tandem (9).

6. Un système selon la revendication 5, caractérisé en ce qu'un volume de pression (10) est relié à un moyen de modulation de chaque modulateur et l'autre volume de pression (11) est relié à l'autre moyen de modulation de chaque modulateur.

FIG1.

FIG.2.

0 120 554

FIG. 3.